Europäisches Patentamt

European Patent Office

Office européen des brevets

(11) Veröffentlichungsnummer: **0 364 773**
**A2**

(12) # EUROPÄISCHE PATENTANMELDUNG

(21) Anmeldenummer: **89117850.1**

(51) Int. Cl.⁵: **G02B 6/04**

(22) Anmeldetag: **27.09.89**

(30) Priorität: **17.10.88 DE 3835325**

(43) Veröffentlichungstag der Anmeldung:
**25.04.90 Patentblatt 90/17**

(84) Benannte Vertragsstaaten:
**CH FR GB IT LI**

(71) Anmelder: **Schott Glaswerke**
**Hattenbergstrasse 10**
**D-6500 Mainz(DE)**

(84) **CH FR IT LI**

Anmelder: **Carl-Zeiss-Stiftung trading as**
**SCHOTT GLASWERKE**
**Hattenbergstrasse 10**
**D-6500 Mainz 1(DE)**

(84) **GB**

(72) Erfinder: **Nattermann, Kurt, Dr.**
**Im Brühl 7**
**D-6507 Ingelheim(DE)**

(54) Flexibles Faserbündel zur Übertragung von Strahlung hoher Leistung insbesondere Laserstrahlung.

(57) Es wird ein Faserbündel zur Übertragung von Strahlung hoher Leistung, insbesondere von Leistungslasern, beschrieben, bei dem mit minimalem Materialaufwand die Strahlung ohne wesentliche Verschlechterung der Strahlqualität (des Strahlproduktes) übertragen werden kann. Formeln zur Errechnung der Dicke des Faserbündels, der Numerischen Apertur sowie der Kern- und Mantelstärke der Einzelfasern werden angegeben.

EP 0 364 773 A2

## Bündel optischer Fasern zur Übertragung von elektromagnetischer Strahlung mit hoher Leuchtstärke

Für viele technische Anwendungen werden als Laser bezeichnete Quellen elektromagnetischer Strahlung mit hoher Leistung eingesetzt, z.B. Nd:YAG-, Nd:Glas-, Metalldampf- und Excimer-Laser. Die Strahlungsleistung von kontinuierlich arbeitenden Lasern kann im kW-Bereich und darüber liegen, bei gepulsten Lasern liegt die Spitzenleistung oft im Bereich oberhalb von 100 kW, häufig sogar im Bereich weit oberhalb von 1 MW. Meistens ist die Strahlqualität von Lasern mit hoher Strahlungsleistung schlecht. Die Strahlqualität eines Lasers wird durch das Strahlprodukt, das ist das Produkt aus dem Durchmesser des Laserstrahls in mm am Ausgang des Lasers mit dem vollen Divergenzwinkel in rad, gekennzeichnet: Ein hohes Strahlprodukt ist gleichbedeutend mit einer schlechten Strahlqualität. Für die Strahlung am Ausgang eines Lasers mit hoher Leistung sind für den Strahldurchmesser Werte von 1 mm bis 100 mm und für den vollen Divergenzwinkel der Strahlung Werte von 0,001 rad bis 0,1 rad typisch, in Sonderfällen können die Werte für den Durchmesser und Divergenzwinkel aber auch weit darüber liegen. Typisch für das Strahlprodukt von Lasern mit hoher Leistung sind Werte im Bereich von 0,02 bis 0,2 rad•mm, bei Metalldampflasern können die Werte sogar weit oberhalb von 0,2 rad•mm liegen.

Eine weitere aussagekräftige Größe zur Charakterisierung von Strahlung ist die Leuchtstärke. Im Fall eines Strahls, der bezüglich der Strahlachse rotationssymmetrisch ist, wird die Leuchtstärke der Strahlung durch $L = P/(\theta•D)^2$ gegeben, wobei P die Spitzenleistung (bzw. Impulsspitzenleistung) der Strahlung, $\theta$ den vollen Divergenzwinkel der Strahlung in rad und D den Durchmesser des Strahls in mm, jeweils gemessen am Ausgang der Strahlungsquelle, bezeichnet. Im allgemeineren Fall eines nichtrotationssymmetrischen Strahls, bei dem die Sehne (bzw. der "Durchmesser") des Strahls und/oder der Divergenzwinkel der Strahlung von Winkel $\phi$ senkrecht zur Strahlachse abhängt, tritt an die Stelle von $(\theta•D)^2$ in der Formel für die Leuchtstärke $L = P/(\theta•D)^2$ das Winkelintegral $\frac{1}{\pi} \int_0^\pi d\phi \ \theta^2(\phi)•D^2(\phi)$, wobei $\theta(\phi)$ den vollen Divergenzwinkel der Strahlung am Ausgang der Strahlungsquelle in Abhängigkeit vom Winkel $\phi$ und $D(\phi)$ die durch den Scheitelpunkt des Winkels $\phi$ gehende Sehne (bzw. Durchmesser) am Ausgang der Strahlungsquelle in Abhängigkeit vom Winkel $\phi$ bezeichnet. Im Vergleich zu den "normalen" Lichtquellen sind bei Lasern hohe Leuchtstärken oberhalb von $10^5$ W/(rad•mm)$^2$, meistens sogar oberhalb von $10^6$ W/(rad•mm)$^2$, typisch.

Für die Übertragung von Strahlung werden häufig flexible (biegbare oder gelenkige) Strahlführungssysteme benötigt. Ein technisch brauchbares Strahlführungssystem sollte folgende Eigenschaften aufweisen:
- eine hohe optische Zerstörschwelle (bzw. maximal übertragbare Strahlungsleistung),
- einen geringen mechanischen Widerstand gegen Verbiegungen oder Verwinkelungen und eine niedrige Untergrenze für den Biegeradius bzw. ein hoher Grenzwinkel für Verwinkelungen,
- keine Verschlechterung der Strahlqualität durch die Übertragung,
- eine hohe Übertragungseffizienz,
- eine gute mechanische Stabilität und, was meistens gleichbedeutend ist, die Verwendung möglichst weniger optischer und mechanischer Komponenten.

Die Strahlführungssysteme können Spiegelgelenkoptiken und Fasersysteme sein.

Spiegelgelenkoptiken zeichnen sich durch eine hohe Zerstörschwelle, hohe Übertragungseffizienz und gute Strahlqualität aus (z.B.: G. Hohberg:"Beam delivery systems for high power lasers", Proc. SPIE, Vol. 650, S. 118-122, 1980). Ihre geringe Flexibilität und aufwendige Mechanik, die Anfälligkeit der vielen mechanischen und optischen Komponenten und der hohe Justieraufwand sind jedoch wesentliche Nachteile. Fasersysteme bestehen aus weniger Komponenten, der bei ihnen notwendige Justieraufwand ist deshalb i.allg. wesentlich kleiner als bei den Spiegelgelenkoptiken, ihre Flexibilität kann besser sein als die der Spiegelgelenkoptiken und die Übertragungseffizienz kann ebenfalls hoch sein. Deshalb werden Fasersysteme i. allg. bevorzugt.

Die bekannten faseroptischen Systeme zur Übertragung hoher Strahlungsleistungen bestehen aus nur einer Faser (z.B.: H.P. Weber und W. Hodel: "High power Light-Transmission in optical Waveguides", Proc. SPIE, Vol. 650, S. 102-108, 1980). Diese faseroptischen Systeme können jedoch oft die Anforderungen an ein Strahlführungssystem für hohe Strahlungsleistungen nicht erfüllen (z.B.: R. Ringelhan, H. Kar, J. Helfmann, K. Dörschel und G. Müller: "Lichtwellenleiter für die Medizin", Laser und Optoelektronik, 20, S. 44-48, 1988).

Wenn das faseroptische System flexibel sein soll (geringer mechanischer Widerstand gegen Verbiegungen, geringe Bruchgefahr), muß der Durchmesser der Faser möglichst klein sein. Außerdem muß ihr Durchmesser klein sein, damit bei Biegungen der Fasern keine zu großen Strahlungsverluste auftreten. Die Forderung nach einem kleinen Durchmesser der Faser steht aber im Widerspruch zu den anderen gewünschten Fasereigenschaften:

a) Um Beschädigungen durch zu hohe Strahlungsintensitäten im Faserkern oder auf der Einkoppelfläche zu vermeiden, muß der Durchmesser der Faser verhältnismäßig groß sein.

b) Strahlung kann nur dann von einer Faser "eingefangen" und über größere Entfernungen übertragen werden, wenn das Produkt aus der Numerischen Apertur der Faser und ihrem Durchmesser mindestens doppelt so groß ist wie das Strahlprodukt der Strahlung. Daraus kann sich eine Forderung nach großen Faserdurchmessern ergeben.

Bei einzelnen Fasern gibt also eine enge Wechselbeziehungen zwischen der zu übertragenen Leistung, dem Strahlprodukt, dem geforderten Biegeradius und dem Durchmesser, die den Gestaltungsspielraum für ein derartiges Übertragungssystem erheblich einengen.

Für die Übertragung von elektromagnetischer Strahlung mit niedriger Leistung ist die Verwendung von Faserbündeln bekannt, insbesondere bei der Bild- oder Signalübertra gung. Die hierbei auftretenden Spitzenleistungen sind kleiner als 1 kW, oftmals sogar kleiner als 1 W, bzw. die Leuchtstärken sind kleiner als $10^4$ W/(rad•mm)$^2$, sicher aber kleiner als $10^5$ W/(rad•mm)$^2$. Bei diesen niedrigen Leistungen spielen die Schadensgrenzwerte der Faserbündel keine Rolle, deshalb können leicht zu verarbeitende "niedrigschmelzende" Multikomponentengläser und sogar Kunststoffe verwendet werden. Bei kleinen Leistungen haben auch Strahlungsverluste eine geringere Bedeutung, deshalb können Materialien mit verhältnismäßig hohen Dämpfungswerten verwendet werden. Ferner ist für die typischen Anwendungen die Qualität der übertragenen ·Strahlung meistens vernachlässigbar (Schott Information 3/1987, Mainz, 1987), deshalb findet keine Optimierung der Faserbündel statt. Die Einkopplungsoptimierung bzw. Anpassung der Faserbündel an Strahlungsquellen läuft darauf hinaus, möglichst viel von der Strahlungsleistung der Strahlungsquelle "einzufangen" - meistens ist es deshalb das Ziel, Faserbündel mit einer möglichst hohen Numerischen Apertur herzustellen.

Für Laserstrahlung mit hoher Leistung sind Spitzenleistungen von mehr als 100 kW und Leuchtstärken von mehr als $10^6$ W/rad•mm)$^2$ typisch. In diesen Fällen müssen die Schadensgrenzwerte der Fasern bzw. Faserbündel und die Verluste beachtet werden. Außerdem hat bei hohen Leistungen die Qualität Strahlung für die Anwendungen eine große Bedeutung.

Die US-PS 46 90 500 beschreibt zwar, wie Faserbündel aus Kieselglas für die Bildübertragung zu optimieren sind. Für die Übertragung von Strahlung mit hoher Leistung sind diese Faserbündel jedoch unbrauchbar.

Faserbündel zur Übertragung hoher Strahlungsleistungen sind an sich bekannt, sie besitzen jedoch sehr schlechte Strahlqualitäten, d.h. das Strahlprodukt der aus dem Faserbündel austretenden Strahlung ist gegenüber dem Strahlprodukt der Ursprungsstrahlung stark erhöht. Sie haben deshalb auch keinen Eingang in die Praxis gefunden. Als Fasern werden vorzugsweise zylindrische Stufenprofilfasern verwendet. Diese Fasern haben einen zylindrischen Kern mit dem Durchmesser $D_k$, der von einem Mantel mit dem Durchmesser $D_m$ umgeben ist, welcher mindestens in der den Kern unmittelbar umgebenden Schicht eine niedrigere optische Brechzahl hat als der Kern und welcher gegebenenfalls noch von einer Schutzhülle umgeben ist. Abweichungen von diesem Aufbau, insbesondere hinsichtlich des Brechzahlprofils und des Faserquerschnitts (z.B. sechseckige Querschnitte) werden als einbezogen betrachtet. Vorzugsweise besteht der Kern und der Mantel der Fasern aus reinem oder dotiertem Kieselglas. Bevorzugt besteht der Kern aus reinem und der Mantel bzw. die den Kern unmittelbar umgebende Schicht des Mantels im wesentlichen aus Fluordotiertem Kieselglas. In diesem Fasern können für Strahlung im nah-ultravioletten bis nah-infraroten Spektralbereich niedrige Dämpfungswerte, niedrige Schwellwerte für nichtlineare optische Effekte und hohe Zerstörschwellen erreicht werden. Die Herstellung der Fasern ist bekannt und es sind entsprechende Fasern und Faser-Vorformen kommerziell erhältlich.

Durch Zusammenfassung einer Vielzahl von Einzelfasern erhält man das Faserbündel. Faserbündel mit Schadensgrenzwerten von bis zu 2 MW/mm$^2$ sind üblich, mit Laborausführungen wurden bereits Schadensgrenzwerte von bis zu 5 MW/mm$^2$ erreicht; mit einer Ausdehnung nach oben auf 10 MW/mm$^2$ und darüber ist zu rechnen. Als Schadensgrenzwert $I_{dam}$ des Faserbündels wird die maximale Intensität bezeichnet, mit der das Einkoppelnde des Faserbündels bestrahlt werden kann, ohne daß das Faserbündel beschädigt wird. Darüberhinaus soll $I_{dam}$ kleiner sein als die Intensität (Schwellwert), ab der im Faserbündel mit unerwünschten nichtlinearen optischen Effekten zu rechnen ist. Das ist in der Praxis der Fall. Der Schadensgrenzwert hängt von den verwendeten Materialien ab und davon, wie die Fasern bzw. die Endflächen der Faserbündel zusammengefügt und bearbeitet werden. Durch eine aufwendige Bearbeitung lassen sich für die Faserbündel hohe Schadensgrenzwerte erreichen: Durch Polieren und gegebenenfalls durch Beschichten der Faserbündelenden, vorzugsweise mit einer Anti-Reflexionsschicht, lassen sich z.B. die Schadensgrenzwerte wesentlich anheben. Verlötete oder verschweißte Faserbündelenden lassen sich dabei wegen ihrer guten Materialhomogenität gut polieren und beschichten. Die Kosten für die Bearbeitung der Faserbündelenden bestimmten zusammen mit den Materialkosten maßgeblich den Preis der Faserbündel.

Die Aufgabe der Erfindung besteht darin, ein zur Übertragung von Strahlung hoher Leistung geeignetes Faserbündel zu finden, mit dem sich die Strahlung ohne wesentliche Verschlechterung der Strahlqualität, d.h. ohne wesentliche Vergrößerung des Strahlproduktes der ausgestrahlten Strahlung im Vergleich zur eingestrahlten Strahlung übertragen läßt, wobei bei Vorgabe eines durch den Herstellungsaufwand bestimmten Schadensgrenzwertes die Menge des notwendigen Materials minimiert werden soll.

Diese Aufgabe wird durch das im Patentanspruch 1 beschriebene Faserbündel gelöst.

Im Bereich einer Leuchtstärke der Strahlung von $10^5$ W/(rad•mm)$^2$ bis $1,6•10^8$ W/(rad•mm)$^2$ bei kontinuierliche oder gepulster Strahlung mit Impulsdauern von mehr als 1 $\mu$s und im Bereich von $10^6$ W/(rad•mm)$^2$ bis $8•10^8$ W/(rad•mm)$^2$ bei gepulster Strahlung mit Impulsdauern von weniger als 1 $\mu$s beträgt die Querschnittsfläche $A_b$ in mm$^2$ des Faserbündels $(1...6)•(P/I_{dam})$, wobei P die maximale Strahlungsleistung (Impulsspitzenleistung) in Watt und $I_{dam}$ den Schadensgrenzwert des Faserbündels in W/mm$^2$ für Strahlung in dem betreffenden Spektralbereich und mit der betreffenden Impulsdauer bezeichnet. Unter der Querschnittsfläche $A_b$ wird dabei selbstverständlich nur der für die Strahlungsleitung wirksame, d.h. der bestrahlte Teil des Faserbündels verstanden. Nichtbestrahlte Teile des Faserbündels sind überflüssig. Die Numerische Apertur NA der Fasern des Faserbündels soll $(0,5•••1)$ multipliziert mit dem Maximum des Quotienten

$$\left\{ \frac{\theta(\varphi) \cdot D(\varphi)}{D_b(\varphi)} \right\}$$

betragen, wobei $\phi$ den Winkel senkrecht zur Strahlachse, $\theta(\phi)$ den vollen Divergenzwinkel der Strahlung in rad am Ausgang der Strahlungsquelle in Abhängigkeit von $\phi$, $D(\phi)$ die bzw. der durch den Scheitelpunkt des Winkels $\phi$ gehende Sehne bzw. Durchmesser des Strahls in mm am Ausgang der Strahlungsquelle in Abhängigkeit von $\phi$ und $D_b(\phi)$ die bzw. der durch den Scheitelpunkt des Winkels $\phi$ gehende Sehne bzw. Durchmesser des Strahls in mm auf dem Einkoppelende des Faserbündels in Abhängigkeit von diesem Winkel $\phi$ bedeutet. Die Numerische Apertur soll jedoch nicht kleiner als 0,05 werden, da dann zu hohe Strahlungsverluste (Mikrokrümmungsverluste) auftreten, und nicht größer werden als 0,35, da dann die Übertragung der gewünschten Leistung kaum noch möglich ist. Der Bereich von 0,24 bis 0,35 für die Numerische Apertur ist nur durch eine starke Dotierung des (SiO$_2$-)

Kerns erhältlich. Das führt jedoch unter anderem zu geringen Schwellwerten für nichtlineare optische Effekte, so daß dieser Bereich nur im unteren beanspruchten Leistungsbereich der Strahlung brauchbar ist. Bevorzugt wird der Bereich 0,07 bis 0,18, insbesondere 0,07 bis 0,13, für die Numerische Apertur, weil in diesem Bereich bei vernachlässigbar kleinen Mikrokrümmungsverlusten Faserbündel mit geringeren Schadensgrenzwerten als im Bereich 0,18 bis 0,35 benutzbar werden. Insbesondere die Verwendung dieser niedrigen Werte für die Numerische Apertur ist überraschend, da bei den bekannten Faserbündeln für die Bild und Signalübertragung stets eine möglichst große Numerische Apertur für die Fasern angestrebt wurde.

Für Strahlen mit bezüglich der Strahlachse näherungsweise rotationssymmetrischen Strahlprofilen und näherungsweise rotationssymmetrischen Winkelverteilungen der Strahlung vereinfacht sich die Formel für die Numerische Apertur NA der Fasern, weil besagter Quotient

$$\left\{ \frac{\theta(\varphi) \cdot D(\varphi)}{D_b(\varphi)} \right\}$$

konstant, d.h. vom Winkel $\phi$ unabhängig ist. Da das Strahlprofil auf dem Einkoppelende des Faserbündels kreisförmig ist, gilt dort zwischen der Querschnittsfläche des Strahls $A_b$ in mm$^2$ und dem Durchmesser des Strahls $D_b$ in mm die Beziehung $D_b = (\frac{4}{x} • A_b)^{1/2} = 1,13 • A_b^{1/2}$. Damit berechnet sich die Numreische Apertur der Fasern des Faserbündels zu $(0,44....0,89)•\theta•D/A/2$, wobei $\theta$ den vollen Divergenzwinkel der Strahlung in rad am Ausgang der Strahlungsquelle, D den Durchmesser des Strahls in mm Ausgang der Strahlungsquelle und $A_b$ die errechnete Querschnittfläche des Faserbündels in mm$^2$ beträgt.

Wenn der Strahl am Ausgang der Strahlungsquelle unterschiedliche Winkelverteilungen in verschiedenen Richtungen senkrecht zur Strahlachse besitzt, d.h. wenn die Winkelverteilung der Strahlung nicht rotationssymmetrisch ist, wird unter Umständen die Numerische Apertur des Faserbündels durch die maximale Divergenz der Strahlung (in Abhängigkeit von der Raumrichtung senkrecht zur Strahlachse) bestimmt. Dann kann durch die Übertragung die Qualität der Strahlung bezüglich der Richtung mit der minimalen Divergenz verschlechtert werden. Vorzugsweise wird deshalb der in das Faserbündel einzukoppelnde Strahl mit geeigneten optischen Systemen (z.B. mit anamorphen Optiken und/oder mit Zylinderlinsen) derart umgeformt, daß in das Faserbündel Strahlung mit einer zur Strahlachse näherungsweise rotationssymmetrischen Winkelverteilung eingekoppelt werden kann. Hierdurch muß möglicherweise in Kauf genommen werden, daß der in das Faserbündel einzukoppelnde Strahl ein unrundes Strahlprofil hat.

Das Faserbündel soll aus Fasern mit im wesentlichen dem gleichen Kerndurchmesser $D_k$ bestehen. Der Kerndurchmesser soll vorzugsweise so groß sein, daß sich die Fasern gerade noch problemlos mit dem gewünschten Biegeradius R biegen lassen, d.h. der Kerndurchmesser der Fasern soll maximal groß sein. Dadurch wird sichergestellt, daß auch der Außendurchmesser der Fasern maximal groß wird und die Zahl der für das Faserbündel notwendigen Fasern minimiert. Durch die Minimierung der Faseranzahl in dem Faserbündel ergibt sich eine gute mechanische Festigkeit der Einzelfasern sowie eine erhebliche Vereinfachung in der Herstellung des Faserbündels. Diese Forderung wird erreicht, wenn der Kerndurchmesser $D_k$ in mm nach der Formel $D_k = NA^2 \cdot b \cdot R$ bestimmt wird, worin NA die Numerische Apertur, R den gewünschten minimalen Biegeradius für die Einzelfaser in mm und b eine Konstante mit Werten zwischen 0,03 und 0,24, bevorzugt zwischen 0,06 und 0,18, darstellt.

Es ist weiterhin von Vorteil, wenn auch die Stärke des Mantels der Fasern optimiert wird. Um eine sichere Strahlungsführung zu gewährleisten, sollte die Dicke in mm des Mantels, der gegebenenfalls aus mehreren Mantelschichten bestehen kann, größer sein als $0,05 \cdot \lambda / NA$, wobei NA die Numerische Apertur der Faser und $\lambda$ die Wellenlänge der zu übertragenen Strahlung in mm bedeutet. Eine größere Stärke des Mantels als 0,05 mm ist i. allg. nicht erforderlich. Sie leistet keinen positiven Beitrag mehr zur Strahlführung sondern führt lediglich zu einer Verringerung des Biegeradius der Faser. Der verhältnismäßig weite Bereich für die Mantelstärke ergibt sich daraus, daß die Dicke des Fasermantels auch davon abhängt, welche Eigenschaften die Umgebung der Fasern (z.B. Kühlmedien) hat, wie stark die Fasern gebogen werden und wie regelmäßig sie im Bündel liegen.

Die Fasern können lose im Faserbündel liegen, wenn ihr Durchmesser groß ist und damit ihre Zugfestigkeit und Biegesteifigkeit ausreichend hoch ist, um einen Bruch der Fasern im Faserbündel auszuschließen. Faserbündel in dieser Ausführungsform lassen sich am einfachsten herstellen. Ein weiterer Vorteil dieser Ausführungsform ist, daß sich die Fasern des Faserbündels gut kühlen lassen. Bei dieser Ausführungsform sollte, um die sichere Strahlungsführung zu gewährleisten, die Dicke in mm des Mantels der Fasern größer als $0,1 \cdot \lambda / NA$ sein, wobei NA die Numerische Apertur der Faser und $\lambda$ die Wellenlänge der zu übertragenen Strahlung in mm bedeutet.

Bei lose im Faserbündel liegenden Fasern können, insbesondere wenn die Numerische Apertur und/oder wenn die Biegesteifigkeit der Fasern klein ist, starke Mikrokrümmungsverluste auftreten. In solchen Fällen kann es vorteilhaft sein, die Fasern mit geeigneten Mitteln im Faserbündel zu führen. Vorrichtungen zum Führen von optischen Fasern in einem Faserbündel gehören zum Stand der Technik. Vorzugsweise soll das Faserbündel auf seiner gesamten Länge verschmolzen werden. Diese Ausführung als verschmolzenes Faserbündel kann verwendet werden, wenn die Querschnittsfläche $A_b$ des Faserbündels kleiner ist als etwa 4 mm², andernfalls wird die Biegesteifigkeit des Faserbündels für technische Anwendungen zu hoch. In einem verschmolzenen Faserbündel stützen sich die Fasern gegenseitig ab, wodurch die zu Mikrokrümmungsverlusten führenden Verbiegungen der Fasern reduziert werden. Ein weiterer Vorteil dieser Ausführungsform ist, daß sich durch die dichte Packung der Fasern in einem verschmolzenen Faserbündel ein zusätzlicher Strahlführungseffekt ergibt: Strahlung, welche eine Faser des Faserbündels verläßt, kann von einer der benachbarten Fasern aufgefangen werden. Wenn ein solches "Überkoppeln" von Strahlung zwischen den Fasern stattfindet, kann zwar die Qualität der übertragenen Strahlung geringfügig verschlechtert werden, es geht aber keine oder nur ein vernachlässigbarer Teil der Strahlung verloren. Bei dieser Ausführungsform sind deshalb für die Dicke des Mantels der Fasern die kleinsten Werte notwendig. Die Verfahren zum Herstellen von verschmolzenen Faserbündeln sind in der Technik bekannt.

Es ist weiterhin bekannt, die Fasern des Faserbündels mit einer gemeinsamen Schutzhülle zu umgeben. Es ist ferner möglich, daß die Schutzhülle bzw. das Faserbündel auch Komponenten zur Kühlung der Fasern bzw. des Faserbündels enthält. Vorzugsweise kann es sich dabei um Kühlmittelleitungen handeln, die im wesentlichen parallel zu den Fasern verlaufen und einen guten thermischen (wärmeleitenden) Kontakt zu den Fasern haben, oder bei denen ein guter thermischer (wärmeübertragender) Kontakt zu den Fasern durch ein geeignetes Übertragungsmittel entsteht, z.B. indem man ein Kühlmedium durch das Faserbündel strömen läßt. Die Schutzhülle kann ferner zusätzliche Komponenten enthalten, die den bestimmungsgemäßen und sicheren Betrieb des Bündels gewährleisten. Vorzugsweise kann es sich bei diesen Komponenten um Leckstrahlungsdetektoren handeln, die auf die bei einem eventuellen Bruch von Fasern freiwerdende Strahlung ansprechen. Oder es kann sich dabei um elektrische oder optische Signalleitungen handeln, mittels derer z.B. geeignete Vorrichtungen an der Strahlungsquelle die Strahlung nur dann freigeben, wenn z.B. die Faserkupplungen im ordnungsgemäßen Zustand sind.

Jede Faser verbindet ein Einkoppelende des Faserbündels mit einem Auskoppelende. An den Enden sind die Fasern in an sich bekannter Weise geeignet zusammengeführt, vorzugsweise werden sie verlötet oder verschweißt. Das Faserbündelende ist i. allg. noch zusätzlich in einer Hülse aus Metall oder Glas gefaßt. Das Zusammenfügen von Fasern an den Endflächen von Faserbündeln ist Stand der Technik.

Aus der DE-PS 26 30 730 ist es beispielsweise bekannt, wie sich die Zwischenräume ("Zwickel") zwischen den Fasern an der Endfläche weitgehend beseitigen lassen. Dazu wird das Ende des Faserbündels erhitzt und radial zusammengedrückt.

Aus der DE-PS 32 47 500 ist es beispielsweise bekannt, Faserbündelenden zu verschmelzen und dabei temperaturbeständig zu machen. Dazu werden die verwendeten Materialien so ausgewählt, daß das Faserbündelende einen von außen nach innen abnehmenden Temperatur-Ausdehnungskoeffizienten besitzt.

Ein Nachteil der bekannten Methoden zur Bearbeitung der Endflächen ist, daß bei Faserbündeln aus vielen oder dünnen Fasern die Fasern am Einkoppelende immer etwas unregelmäßig liegen und infolgedessen Strahlungsverluste auftreten. Die Verluste lassen sich reduzieren, wenn die Fasern vor dem Zusammenfügen des Faserbündelendes einzeln gelegt werden und ihre Lage während des Zusammenfügens kontrolliert wird. Das ist nur dann mit vertretbarem Aufwand möglich, wenn nur wenige und dicke Fasern verwendet werden. Deshalb sollen möglichst dicke Fasern für die Faserbündel verwendet werden.

Ein weiterer wesentlicher Nachteil der bekannten Methoden zur Bearbeitung der Faserbündelenden ist, daß das Verhältnis aus der Kernfläche zur Gesamt-Querschnittsfläche der Fasern zum Einkoppelende des Faserbündels hin im wesentlichen konstant bleibt. Werden die Faserendflächen an dem Einkoppelende gleichmäßig ausgeleuchtet, dann wird nur der auf die Querschnittsfläche der Kerne auftreffende Strahlungsanteil eingefangen und weitergeleitet; der auf die Querschnittsfläche der Mäntel auftreffende Strahlungsanteil, der als Einkoppelverlust bezeichnet wird, wird in thermische Energie umgesetzt und kann zu Schäden am Faserbündel führen. Falls die Wärmeentwicklung zu groß wird, kann eine Kühlung des Einkoppelendes erfolgen, besonders vorteilhaft ist es jedoch, wenn die Fasern an ihrem Einkoppelende ganz oder teilweise von ihrem Mantel befreit sind. Diese Entfernung des Mantels kann auch am Auskoppelende vorteilhaft sein.

Vorzugsweise erfolgt die Entfernung des Mantels durch Abätzen vor dem Zusammenfügen der Faserbündelenden. Die Verfahren zum Abtragen des Materials von den Fasermänteln durch Abätzen gehören zum Stand der Technik. Besonders vorteilhaft bei diesen Verfahren ist, daß sich ein Fasermantel gezielt konisch ätzen läßt, und daß sich so ein "sanfterer", d.h. verlustfreierer Übergang am Einkoppelende herstellen läßt. Eine geringfügige Verätzung des Kerns läßt sich dabei nicht immer vermeiden.

Ein weiteres geeignetes Verfahren zur Beseitigung von Material der Fasermäntel am Einkoppelende des Faserbündels ist, das Material für die Faserkerne und Fasermäntel derart auszuwählen, daß das Material der Fasermäntel eher erweicht als das der Faserkerne. Beim Zusammenfügen der Faserbündelenden werden die Fasern dann entsprechend erwärmt und das Faserbündelende radial so zusammengedrückt, daß das Material der Fasermäntel aus dem Faserbündelende herausgequetscht wird. Eine plastische Deformation der Faserenden im Sinne einer dichteren Flächenpackung kann bei dieser Gelegenheit ebenfalls erfolgen. Die Verformung des Faserkerns darf jedoch nicht so weit gehen, daß die Querschnittsfläche des Faserkerns verringert wird.

Durch entsprechende Gestaltung des Einkoppelendes wird es möglich, daß auch Strahlung mit einem nichtrunden Strahlprofil in ein Faserbündel mit den zuvor beschriebenen Merkmalen eingekoppelt und übertragen werden kann. Wenn jedoch ein Faserbündel mit rundem Querschnitt des Einkoppelendes verwendet werden soll, um Strahlung mit einem beispielsweise rechteckigen oder elliptischen Profil zu übertragen, muß in Kauf genommen werden, daß der Materialaufwand zur Herstellung des Faserbündels größer als nötig ist. Vorzugsweise soll deshalb in einer nachfolgend beschriebenen Weise das Querschnittsprofil des Einkoppelendes dem Strahlprofil der einzukoppelnden Strahlung entsprechend verformt werden.

Mit Hilfe der Faserbündel kann auch sehr einfach eine Aperturwandlung vorgenommen werden, d.h., es ist leicht möglich, am Strahlungsaustritt ein anderes Querschnitts profil als am Strahlungseintritt zu erzeugen. Die Aperturwandlung wird dadurch erreicht, daß das Querschnittsprofil der Faserbündel-Einkoppelenden dem Strahlprofil der einzukoppelnden Strahlung entsprechend verformt wird und/oder daß der Querschnitt der Faserbündel-Auskoppelenden den Erfordernissen der Verbraucher entsprechend verformt wird. Dazu sollen die Fasern an den Faserbündelenden vor dem Zusammenfügen bzw. Verlöten oder Verschweißen entsprechend der gewünschten geometrischen Form des Endes gelegt werden und/oder die erhitzten und erweichten Fasern an dem Ende während des Verlötens oder Verschweißens in die gewünschte geometrische Form gepreßt werden.

Die Aperturwandlung wird weiterhin dadurch erreicht, daß die Fasern im Faserbündel in einer der nachfolgend bezeichneten Weisen umverteilt werden. Wenn eine Strahlungsquelle Strahlung mit einem inhomogenen Strahlprofil emittiert und für die Anwendungen ein Profil mit dem Intensitätsmaximum in der Strahlmitte notwendig ist, sollen die Fasern, die von Stellen des Einkoppelendes mit hohen Werten für die Strahlungsintensität ausgegehen, am Auskoppelende an Stellen nahe der Mitte, und die Fasern, die von Stellen mit niedrigen Werten für die Intensität ausgegangen, am Auskoppelende an Stellen nahe des Randes enden. Wenn eine Strahlungsquelle Strahlung mit einem inhomogenen Strahlprofil emittiert und für die Anwendungen eine möglichst gleichmäßige Intensität notwendig ist, sollen Fasern, die von Stellen auf dem Eintrittsende mit hoher Strahlungsintensität, und Fasern, die von einer Stelle mit niedriger Intensität ausgehen, am Austrittsende gleichmäßig verteilt sein. Wenn eine Strahlungsquelle Strahlung mit einem näherungsweise homogenen Strahlprofil emittiert und für die Anwendungen ein inhomogenes Profil mit dem Intensitätsmaximum in der Strahlmitte notwendig ist, . können die Fasern des Faserbündels auf dem Auskoppelende mit einer ortsabhängigen Dichte gelegt werden, wobei die Dichte der Fasern zum Rand des Auskoppelendes hin abnimmt, wobei die Lage der Fasern am Auskoppelende durch Distanzstücke fixiert wird. Eine Variante des letzten Beispiels ist, daß die Distanzstücken aus Materialien insbesondere aus Fasern (Auffüllfasern) bestehen, die sich mit den Fasern des Faserbündels verlöten oder verschweißen lassen. Diese sog. Auffüllfasern können, z.B. durch Einfangen eines Teils der an der Auskoppelseite zurückgestreuten Strahlung und Einleiten dieser Strahlung in Detektions- und Analysengeräte, dazu dienen, den Strahlungsfluß, den Zustand oder die Justierung der auskoppelseitigen Komponenten zu überprüfen. Die Auffüllfasern können weiterhin auch dazu dienen, elektromagnetische Strahlung mit niedriger Leistung, vorzugsweise im sichtbaren Spektralbereich, dem Auskoppelende des Faserbündels zuzuführen, mit welcher der Zustand oder die Justierung der auskoppelseitigen Komponenten überprüft werden kann.

Ein einkoppelseitiges Multiplexing wird dadurch erreicht, daß mehrere Faserbündel mit getrennten Einkoppelenden zu einem gemeinsamen Bündel vereinigt werden, in dem die Strahlung von getrennten Strahlungsquellen an den Einkoppelenden der Faserbündel vereinigt wird. Die Vorteile dieser Anordnung sind, daß in dem vereinigten Faserbündel eine höhere Strahlungsleistung zur Verfügung steht als eine einzelne Strahlungsquelle zu leisten vermag, daß bei gepulst arbeitenden Strahlungsquellen in dem vereinigten Faserbündel im zeitlichen Mittel eine höhere Strahlungsleistung zur Verfügung steht, als eine einzelne Strahlungsquelle zu leisten vermag oder daß bei gepulst arbeitenden Strahlungsquellen mit niedrigerer Repetitionsrate (Wiederholrate) in dem vereinigten Faserbündel eine höhere Pulsfrequenz der Strahlung vorliegt und somit bei bestimmten Anwendungen eine höhere Arbeitsgeschwindigkeit möglich ist. Bei einem störungs- oder wartungsbedingten Ausfall von Strahlungsquellen kann durch das Multiplexing die Funktionstüchtigkeit des Gesamtsystems gewährleistet werden: Bei einer genügend hohen Zahl von Strahlungsquellen wird bei einem Ausfall einer Strahlungsquelle die Strahlungsleistung in dem vereinigten Faserbündel nur entsprechend dem Anteil der Strahlungsquelle an der Gesamtstrahlung abfallen.

Ein auskoppelseitiges Multiplexing wird dadurch erreicht, daß sich ein Faserbündel in mehrere kleinere Faserbündel oder Fasern aufteilt, die zu getrennten Verbrauchern führen. Ein Vorteil dieser Anordnung ist, daß die Strahlung von einem oder mehreren leistungsstarken Strahlungsquellen zugleich mehrere Verbraucher versorgen kann und deshalb eine bessere Ausnutzung der Strahlungsquellen möglich ist.

Ein beidseitiges (ein- und auskoppelseitiges) Multiplexing wird dadurch erreicht, daß mehrere zunächst getrennte Faserbündel, an deren Einkoppelenden sich Strahlungsquellen befinden, zu einem Faserbündel vereinigt werden, welches sich wieder in mehrere Faserbündel oder Einzelfasern aufteilt, die zu den getrennten Verbrauchern an den Auskoppelenden führen. Ein Vorteil dieser Anordnung ist beispielsweise, daß bei einem störungs- oder wartungsbedingten Ausfall von Strahlungsquellen die Funktionstüchtigkeit des Gesamtsystems gewährleistet ist: Bei einer genügend hohen Zahl von Strahlungsquellen wird beim Ausfall einer Strahlungsquelle die Strahlungsleistung an einem Auskoppelende nur unwesentlich abfallen.

Beispiel

Es soll die Strahlung eines Kupferdampflasers (Wellenlängen bei 511 und 578 nm) übertragen werden. Der Laser hat eine mittlere Leistung von etwa 100 W, ein rundes Strahlprofil, eine zur Strahlachse rotationssymmetrische Winkelverteilung der Strahlung und eine Strahlqualität (Strahlprodukt) von etwa 0,1 rad·mm. Die Repetitionsrate des Lasers beträgt etwa 6 kHz und die Impulsdauer etwa 20 ns, damit kann für die Spitzenleistung P ungefähr ein 1 MW und für die Leuchtstärke ungefähr $L \approx 10^8$ W/(mrad·mm)$^2$ errechnet werden. Das Faserbündel soll einen minimalen Biegeradius R von 100 mm haben.

Für die Übertragung dieser Strahlung kann nur ein Faserbündel mit einem hohen Schadensgrenzwert Verwendung finden. Es soll ein Faserbündel eingesetzt werden, das durch entsprechende Auswahl der Fasermaterialien (hochreines Kieselglas) und Behandeln des Einkoppelendes (Verschweißen der Fasern, Polieren und Anti-Reflexions-Beschichtung) einen Schadensgrenzwert von 3 MW/mm$^2$ besitzt. Die Querschnittsfläche $A_b$ des Faserbündels in mm$^2$ berechnet sich nach der Formel $A_b = 1,3 \cdot (P/I_{dam})$ zu 0,43 mm$^2$. Der Faktor 1,3 wurde statt der unteren Grenze von 1,0 gewählt, um die Toleranzen bei der Justierung des Faserbündels zu erhöhen. Die Numerische Apertur NA errechnet sich gemäß $NA = 0,51 \cdot (\theta \cdot D)/A_b^{1/2}$ zu 0,078. Für den Kerndurchmesser $D_k$ ergibt sich gemäß $D_k = NA^2 \cdot b \cdot R$ mit $b = 0,12$ ein Durchmesser von 0,073 mm und für die Stärke des Mantels gemäß $0,2 \cdot \lambda/NA$ für $\lambda = 578$ nm eine Stärke von 0,0015 mm, wobei aus Sicherheitsgründen eine Stärke von 0,002 mm verwendet wird. Daraus ergibt sich ein Gesamtdurchmesser $D_m$ einer Einzelfaser von 0,077 mm. Die Anzahl der Fasern im Faserbündel errechnet sich damit zu etwa 90. Bei einer so geringen Anzahl können die Fasern sogar manuell präpariert und handverlegt werden. Die Einkoppeleffizienz, d.h. der Anteil der in das Faserbündelende eintretenden Strahlung, der von den Kernen eingefangen wird, beträgt gemäß der Formel $(D_k/D_m)^2$ etwa 0,90, d.h. es gehen bei der Einkopplung etwa 10 %, also 10 W der Strahlungsleistung in den Fasermänteln verloren. Bei guter Entspiegelung des Faserbündelendes läßt sich, unter Vernachlässigung der Strahlungsdämpfung im Fasermaterial (bei $SiO_2$-Fasern in dem betreffenden Spektralbereich etwa 20 dB/km) von etwa bis 90 % erreichen. Werden die Fasermäntel durch konisches Abätzen in einer Länge von ca. 0,5 bis 2 cm am Faserende entfernt, so erhöht sich die Einkoppeleffizienz, wodurch die Übertragungseffizient auf bis zu 99 % ansteigen kann.

**Ansprüche**

1. Flexibles Faserbündel zur Übertragung von Strahlung hoher Leistung, insbesondere Laserstrahlung, bestehend aus einer Vielzahl von Multimode-Einzelfasern, die aus Kern und Mantel bestehen und an den Enden des Faserbündels zusammengefaßt sind,
dadurch gekennzeichnet,
daß für kontinuierliche oder gepulste Strahlung mit Impulsdauern von mehr als 1 μs mit einer Leuchtstärke von $10^5$ W/(rad $\cdot$ mm)$^2$ bis $1,6 \cdot 10^8$ W/(rad $\cdot$ mm)$^2$ und für gepulste Laserstrahlung mit Impulsdauern von weniger als 1 μs mit einer Leuchtstärke von $10^6$ W/(rad $\cdot$ mm)$^2$ bis $8 \cdot 10^8$ W/(rad $\cdot$ mm)$^2$
a) die Querschnittsfläche $A_b$ in mm$^2$ des Faserbündels $(1...6) \cdot P/I_{dam}$ beträgt, wobei P die maximale Strahlungsleistung (Impulsspitzenleistung) in Watt und $I_{dam}$ den Schadensgrenzwert des Faserbündels in W/mm$^2$ bezeichnet,

b) die Numerische Apertur NA der Fasern des Faserbündels das Maximum des Quotienten

$$\left\{ \frac{\theta(\varphi) \cdot D(\varphi)}{D_b(\varphi)} \right\}$$

multipliziert mit $(0,5...1)$ beträgt, wobei $\theta(\phi)$ der volle Divergenzwinkel der Strahlung am Ausgang der Strahlungsquelle in rad in Abhängigkeit vom Winkel $\phi$ senkrecht zur Strahlachse, $D(\phi)$ die bzw. der durch den Scheitelpunkt des Winkels $\phi$ gehende Sehne bzw. Durchmesser des Strahls in mm am Ausgang der Strahlungsquelle in Abhängigkeit vom Winkel $\phi$ und $D_b(\phi)$ die bzw. der durch den Scheitelpunkt des Winkels $\phi$ gehende Sehne bzw. Durchmesser des Strahls in mm auf dem Einkoppelende des Faserbündels in Abhängigkeit von dem Winkel $\phi$ bezeichnet, wobei die Numerische Apertur jedoch nicht kleiner als 0,05 und nicht größer als 0,35 ist.

2. Faserbündel nach Anspruch 1,
dadurch gekennzeichnet,
daß die Numerische Apertur zwischen 0,07 und 0,18 liegt.

3. Faserbündel nach wenigstens einem der Ansprüche 1 oder 2,
dadurch gekennzeichnet,
daß der Kerndurchmesser der Fasern des Faserbündels $D_k = NA^2 \times b \cdot R$ beträgt, wobei NA die Numerische Apertur, R den geforderten minimalen Biegeradius in mm und b eine Konstante mit Werten von 0,03 bis 0,24 bedeutet, jedoch, größer ist als $0,8 \cdot \lambda/NA$, wobei $\lambda$ die Wellenlänge der zu übertragenen Strahlung in mm und NA die Numerische Apertur der Fasern bedeutet.

4. Faserbündel nach wenigstens einem der Ansprüche 1 bis 3,
dadurch gekennzeichnet,
daß die Dicke in mm des Mantels der Fasern größer als $0,05 \cdot \lambda/NA$ aber kleiner als 0,05 mm ist, wobei $\lambda$ die Wellenlänge der zu übertragenen Strahlung in mm und NA die Numerische Apertur der Fasern bedeutet.

5. Faserbündel nach wenigstens einem der Ansprüche 1 bis 4,
dadurch gekennzeichnet,
daß die Fasern des Faserbündels am Einkoppelende und gegebenenfalls am Auskoppelende ganz oder teilweise von ihrem Mantel befreit sind.

6. Faserbündel nach wenigstens einem der Ansprüche 1 bis 5,
dadurch gekennzeichnet,

daß die Fasern über ihre gesamte Länge miteinander verschmolzen sind.

   7. Faserbündel nach wenigstens einem der Ansprüche 1 bis 6,
dadurch gekennzeichnet,
daß die Numerische Apertur des Faserbündels für rotationssymmetrische Strahlen zwischen $0,44 \cdot (\theta \cdot D)/A_b^{1/2}$ und $0,89 \cdot (\theta \cdot D)/A_b^{1/2}$ liegt.